# EUROPEAN PATENT APPLICATION

(11) **EP 3 447 328 A1**
(43) Date of publication of application: **27.02.2019**
(21) Application number: 17275124.0
(22) Date of filing: 21.08.2017
(51) Int. Cl.: F16F 1/373, F16F 1/38

(54) **ANTI VIBRATION MOUNT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Disclosed is an anti-vibration apparatus (20; 30) comprising a bush (230; 330), said bush (230; 330) comprising a substantially rigid, elongate core (260; 360), covered in a vibration dampening material (240; 340) having at least one end cap washer (210a, 210b; 310a, 310b), configured in that the bush (230; 330) engages with the end cap washer (210a, 210b; 310a, 310b) to cover the end of the elongate core (260; 360),
wherein the vibration dampening material (240; 340) further comprises a plurality of recessed portions (232) on its surface.

## Description

The present invention relates to an anti-vibration mount for use, particularly, in machinery. Arrangements of the present invention may find other uses in other systems.

In many areas of engineering or mechanics, the vibrations caused by motion of, for example, machinery can have undesirable effects, whether those affects be unwanted noise or in fact, damage to a machine or system components. As a result it is a recognised and common practice to attempt to isolate vibrations caused by machines or reduce vibration effects on machines.

Known methods of vibration suppression are generally split into two types of approaches, active suppression and passive suppression. Active suppression involves the use of destructive interference to cancel-out unwanted vibrations; passive suppression involves the use of materials or mechanics to dampen unwanted vibrations.

Numerous methods of passive vibration suppression solutions are known and employed to suppress vibrations in mechanical devices. These may include springs, pads or sheets of flexible material, rubber moulds, air bladders or larger, more industrial solutions such as base isolators, constructed from neoprene and steel, used to lower the vibrational frequency of buildings. Of these methods, some are better suited to certain applications, whether due to weight, durability, cost or size, however all aim to isolate vibrations caused by a machine or component to as little as possible by ensuring the method of vibration suppression is correctly paired with the intended use.

In prior art, known vibration suppression mounts used for machinery may comprise a bush having a core, often formed from steel, and a vibration damping material, such as for example an elastomer material coating the outer surface of the core. The vibration suppression mount is used to aid support for the weight of a machine, the steel core preventing the over-compression of the suppression mount's Vibration Dampening Material (VDM), and the VDM is used to reduce isolate vibrations of the machine. In use the vibrations caused by the machine oscillate at a frequency, which passes into the vibration suppression mount and is dampened as it passes through the VDM surrounding the core.

It is an aim of the present invention to increase the effectiveness of acoustic vibration isolation in machine mounts.

According to the present invention there is provided an anti-vibration apparatus comprising a bush, said bush comprising a substantially rigid elongate core, said elongate core is covered in a vibration dampening material, the bush having at least one end cap washer, arranged such that the bush engages with the end cap washer to cover the end of the elongate core, characterised in that the vibration dampening material further comprises a plurality of recessed portions on its surface. Preferably there are two end cap washers at both ends of the bush.

The elongate core provides the structural rigidity for the bush; it may be formed from a substantially rigid material, such as a metal or composite, preferably a metal, such as for example steel. The elongate core is covered in a VDM. The elongate core provides support of the machine or component whose vibrations it is intended to suppress. The material of the elongate core may be selected provided it has sufficient rigidity to support at least some of the weight of the machine

The dimensions of the elongate core may be selected depending on the application. The elongate core may have a diameter in the range of from 10mm to 300mm, preferably 10mm to 100mm. As one example in a waterborne vessel, the elongate core may be formed of steel with a diameter in the range from 10mm - 30mm.

The elongate core may be solid hollow or low density matrix filled, to reduce the mass. For example in one arrangement the elongate core may be tubular and comprise an inner diameter of 12mm-22mm and an outer diameter of 15mm-25mm. The steel core may have a length in the range of 30mm - 150mm.

The size of the elongate core may vary if the elongate core is comprised of a material other than metal. There may be a plurality of anti-vibration apparatuses used to support a machine.

Located at the end of the elongate core is an end cap washer, positioned to retain the elongate core and VDM material. The end cap washer may be comprised of a further VDM, which may be selected from the same or different material to the VDM coating the elongate core. The end cap washer may be located in rigid support housing. The support housing may be independently selected from the same materials as the elongate core. In a preferred arrangement the end cap washer may comprise the further VDM material located on the inner surface of the end cap washer. The further VDM may provide further suppression of machine born vibrations and to aid this may comprise a step or recess, to provide additional expansion space, the end cap washer may be either fixed or reversibly attached, preferably reversibly attached to the elongate core of VDM.

In a preferred arrangement there are at least two end cap washers, one end cap washer positioned at each ends of the elongate core. The end cap washers and bush being engaged with part of a vibrating machine.

In a further arrangement there is at least one support housing abutting the outermost surfaces of the end cap washers, with said support housing being reversibly connected to the end cap washers and the elongate core. The support housing may be any rigid material, such as a metal, fibre composites or rigid polymers.

When the mount is in use the support housing in conjunction with the elongate core prevent over compression of the VDM and so ensure an optimum level of rigidity of the VDM.

In a preferred arrangement there is a retainer to retain the at least two support housings and at least two end cap washers in contact with the bush. The at least two support housings are required to be kept under compression, such as, for example the retainer may be an elongate bolt and nut. The bolt may extend through the tubular elongate core, and a nut may be used to clamp the two support housings, two end cap washers on to the bush.

According to a further aspect of the invention there is provided an anti-vibration system, comprising a hull or chassis, a machine which produces vibration during operation, and one or more anti-vibration apparatuses as defined herein, wherein the one or more anti-vibration apparatuses are located between the hull or chassis and the machine, to reduce vibrations of said machine.

In use VDM of the bush and the further VDM of the two end cap washers abut the vibrating machine. To ensure that the machine during its vibration does not move away from the VDM and further VDM, there is a retainer which is mounted on the chases or hull, and clamps the machine into engagement with the VDM on the bush, and the VDM of the two end cap washers.

The apparatus is preferably fixed to a body, for example a mounting surface, such as a vehicle or vessel floor, hull, chassis or wall. The body may comprise an elongate bolt which extends through the apparatus and retains by clamping means the two support housings, two end cap washers and bush, such that they remain in abutting contact with the machine that vibrates.

The VDM suppresses machine born vibration that passes through the bush from the machine. The vibration damping material (VDM) may be selected from any resilient biased material, such as for example natural rubber, polymers, elastomers, or combinations thereof. The elastomers may be selected from polyurethanes, poly and perflurinated polymers, polypropylenes, polybutyls, polyimides, polysulfones, nylons, neoprene.

The VDM may preferably be a rubber or elastomer as it may be formed into many shapes and its elasticity provides a high level of vibration suppression. It is found to be particularly advantageous when suppressing machine born vibrations. The selection of the VDM depends on the overall acoustic performance of the machine; therefore in order to adequately suppress a given machine vibration the bush comprising the VDM should have a natural frequency significantly less than that of the machines frequency.

This natural frequency of the VDM is determined by its rigidity, which in use may vary with the mass of the object it is supporting. As the mass of the object (for example machinery) is often not able to be changed, changing the VDM rigidity by material selection, composition or geometry can be a way of effecting vibration suppression performance.

If a VDM's movement is restricted when a force applying a compressive load is applied to the VDM surface the rigidity of the VDM will be high, compared to the rigidity of the VDM if it had free movement. Therefore the shape and free movement of a VDM, when used in vibration submission is an important consideration in design. If a VDM has space to expand under a compressive load the likelihood of reaching the VDM's rigidity limit of effectiveness can be reduced, allowing it to have better vibration suppression result.

The vibration dampening material surrounding the elongate core is most effective when covering the entire elongate core, as this increases the amount of VDM available. The operation of the VDM works by being able to cushion the machine weight and under compression, mitigate the vibrations produced by machine movement and operation by providing an area for the machine vibrations to dissipate into as they pass through the VDM. If however the VDM is over compressed, for example due to a lack of expansion space the VDM becomes less able to absorb vibrations and so becomes less effective. Conversely the VDM must be of a certain rigidity to be operationally effective, otherwise it will not absorb machine vibrations, and as a result the VDM rigidity optimisation is important.

The provision of additional expansion space in the VDM prevents the material becoming overly compressed by machine weight and so optimises the rigidity of the VDM. In a highly preferred arrangement this expansion space may be provided by incorporating a plurality of recessed portions in the surface of the VDM. The recessed portions may be formed in the VDM in order that they provide a cavity or void area to allow the compressed VDM to occupy and move into the cavity/void ie recessed area. The recessed portions may have walls that are substantially straight and a floor, in a preferred arrangement at least one of the recessed portions comprises a sloped wall, preferably all recessed portions would comprise a sloped wall creating an obtuse angle between the sloped wall and recessed portion floor. This further increases vibration suppression performance by allowing expansion of all areas of the wall throughout the recessed portion. The creation of a recessed portion with a sloped or curved wall also allows for increased speed of manufacturing as the recessed portions may be formed faster due to the lack of a need for increased accuracy over recessed portions with straight walls. Further, the use of curved portions militates against tearing of the VDM, as straight cuts can lead to failure points and tearing of the VDM.

Preferably there is a plurality of recessed portions extending across the surface of the VDM. The introduction of recessed portions into the VDM provides advantages in optimising rigidity; this has an additional benefit by allowing the bush to be mounted in a horizontal orientation as well as a vertical orientation. Conventional R2 anti-vibration mounts cannot be mounted horizontally due to the limitations of optimisation of rigidity to the mass of the machine over deforming the VDM.

The recessed portions may be present in a number of orientations or configurations on the VDM in order to provide a beneficial impact. These include, but are not limited to, a plurality of recessed "spots" over the VDM, a recessed portion or groove, running the vertical length of the VDM or a recessed portion or groove running circumferentially around the VDM on the elongate core. In a preferred arrangement there is a plurality of recessed portions running along the main axis of the VDM on the elongate core.

Although a few preferred embodiments of the present invention have been shown and described, it will be appreciated by those skilled in the art that various changes and modifications might be made without departing from the scope of the invention, as defined in the appended claims.

For a better understanding of the invention, and to show how embodiments of the same may be carried into effect, reference will now be made, by way of example only, to the accompanying diagrammatic drawings in which:
Figure 1a shows an image of a prior art vibration suppression mount design currently used for vibration suppression in machines.
Figure 1b shows a plan view of a prior art vibration suppression mount, specifically looking at bush configuration, with washers omitted.
Figure 2a shows an improved vibration suppression mount, according to the invention.
Figure 2b shows a cross-section of a vibration suppression mount, according to the invention.
Figure 2c shows a sectional image of the lower portion of a vibration suppression mount, according to the invention.
Fig 3a shows a schematic of the vibration suppression mount mounted vertically.
Fig 3b shows a schematic of the vibration suppression mount mounted horizontally.
Fig 3c shows a schematic of the vibration suppression mount with mounted vertically with support housing and secured with nut and bolt.

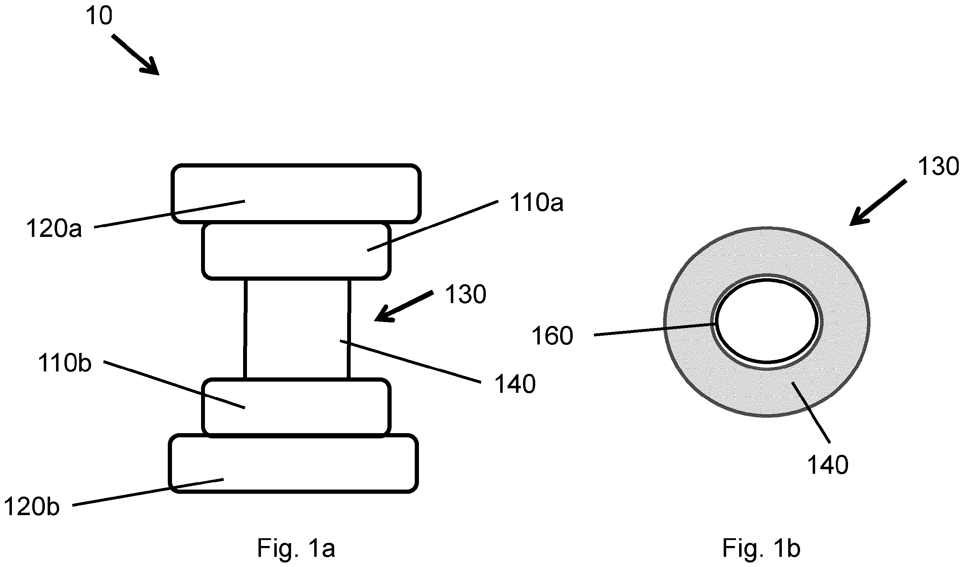

Referring to prior art figures 1a and 1b there is presented an existing vibration suppression mount 10, having a bush 130, comprising an elongate core 160 covered in a VDM 140. The vibration suppression mount 10 further comprises at least two end cap washers 110a and 110b mounted at the substantial ends of the bush 130 and in the embodiment shown in Fig 1a has an additional two steel washers 120a, 120b which provide support to corresponding bush 130.

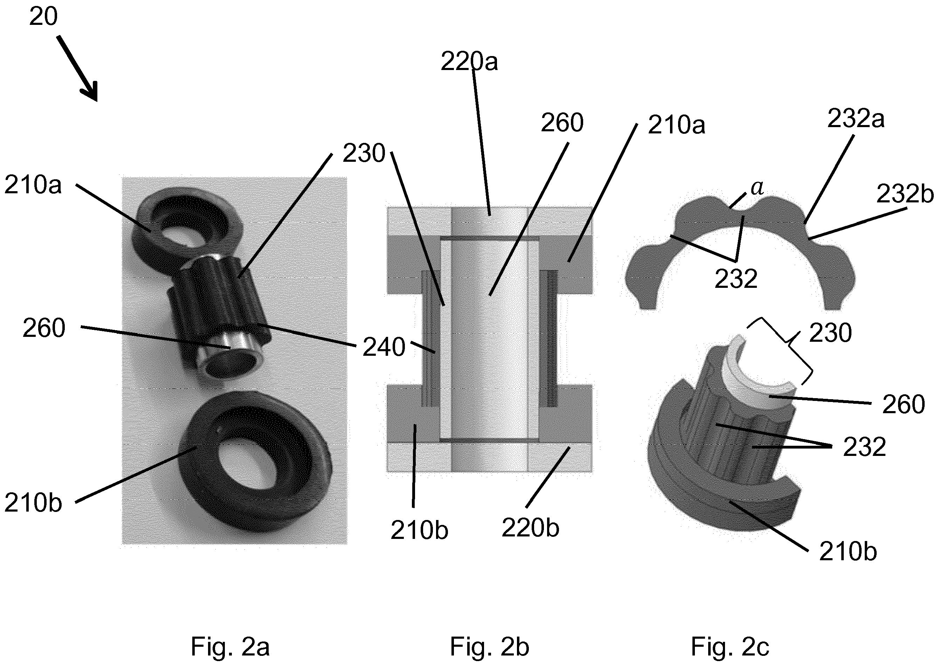

Figure 2a, Figure 2b and Figure 2c show a preferred arrangement of the vibration suppression mount 20 comprising a bush 230 with an elongate core 260 covered with a VDM 240. The elongate core 260 is capped at each end with end cap washers 210a and 210b, Fig. 2b further shows two support housings 220a and 220b positioned on the outermost ends of the end cap washers 210a and 210b, respectively, to support the vibration suppression mount 20.

The VDM 240 covering the elongate core 260 comprises a plurality of recessed portions 232, which provide space for expansion of the VDM 240 when the bush 230 and VDM 240 are under a compressive force.

The recessed portion 232 comprises a recessed portion wall 232a and recessed portion floor 232b

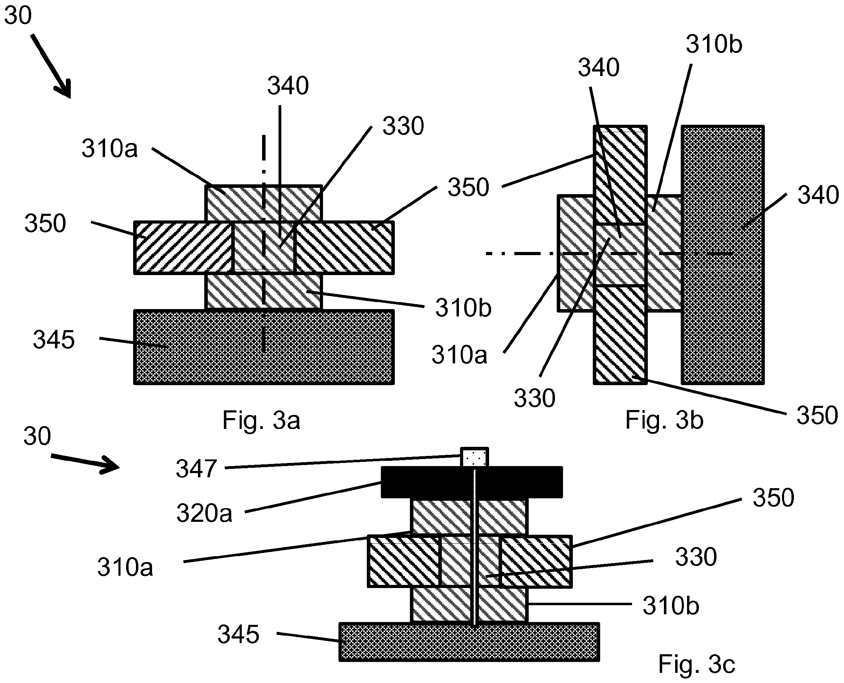

Figure 3a, 3b and 3c show the vibration suppression mount 330, orientated in both the vertical fig. 3a and horizontal fig. 3b orientations. The vibration suppression mount 330 is reversibly attached to a fixing surface 345 which may be a boat or ship hull or a vehicle chassis for example, from which surface the vibrations are to be isolated from. The machine 350 producing the vibrations to be suppressed, engages with the bush 330 while being supported by the end cap washers 310a and 310b. Vibrations caused during the machine's 350 operation may then be suppressed by the VDM 340 and the end cap washer 310a and 310b. The recessed portions 232 (fig 2a - fig 2c) in the VDM 340 allows the VDM 340 additional expansion space, therefore optimising the rigidity of the VDM 340 to the weight of the machine 350.

Figure 3c shows the vibration suppression mount 30 with bush 330, orientated in a vertical arrangement. The vibration suppression mount 30 is reversibly attached to a fixing surface 345, by a retainer 347, such as a nut and elongate bolt, which clamps the at least one support housing 320a to the fixing surface 345 ie the chassis or hull. In this arrangement the fixing surface is rigid, and therefore a second support housing may not be required, as the action of the nut and bolt retainer 347 can provide sufficient compression to keep the machine 350 in contact with the bush 330 and end cap washers 310a and 310b.

## Claims

1. An anti-vibration apparatus comprising a bush, said bush comprising a substantially rigid elongate core, said elongate core comprises a vibration dampening material, the bush further having at least one end cap washer, configured in that the bush engages with the end cap washer to cover the end of the elongate core,
**characterised in that** the vibration dampening material further comprises a plurality of recessed portions on its surface.

2. An anti-vibration apparatus as described in claim 1, wherein at least one of the recessed portions comprises at least one wall and a floor.

3. An anti-vibration apparatus as described in claim 2, wherein the at least one wall is a sloped wall and creates an obtuse angle between the sloped wall and recessed portion floor.

4. An anti-vibration apparatus as described in any preceding claim, wherein the vibration dampening material is selected from an elastomer or rubber.

5. An anti-vibration apparatus as described in any one of the preceding claims, wherein there are at least two end cap washers located either end of the bush, wherein the at least two end cap washers are selected from a further vibrational damping material.

6. An anti-vibration apparatus as described in any preceding claim, wherein the plurality of recessed portions extends axially along the main axis of the elongate core.

7. An anti-vibration apparatus as described in any preceding claim, wherein the end cap washer comprises a stepped portion to allow insertion of the respective end of the elongate core and to interface fit with said vibration dampening material.

8. An anti-vibration apparatus as described in any preceding claim, wherein the apparatus further comprises two support housings positioned to abut an outer surface of the end cap washer.

9. An anti-vibration apparatus as described in claim 8, wherein the at least two support housings are metal.

10. An anti-vibration apparatus as described in any preceding claim, wherein the elongate core is selected from a metal.

11. An anti-vibration apparatus as described in any one of claims 8 to 10, wherein there is a retainer to retain the at least two support housings and at least two end cap washers in contact with the bush.

12. An anti-vibration apparatus as described claim 11, wherein the retainer is an elongate bolt and nut.

13. An anti-vibration system, comprising a hull or chassis, a machine which produces vibration during operation, and one or more anti-vibration apparatuses according to any one of claims 1 to 10, wherein the one or more anti-vibration apparatuses are located between the hull or chassis and the machine, to reduce vibrations.

14. An anti-vibration system according to claim 13, wherein the anti-vibration apparatuses comprise a bush, wherein the machine abuts the VDM on the bush.

15. An anti-vibration system according to claim 13 and 14, wherein there is a retainer which is mounted on the chases or hull, and clamps the machine into engagement with the VDM on the bush, and the two end cap washers.
